# EUROPÄISCHE PATENTANMELDUNG

(11) **EP 1 010 676 A1**
(43) Veröffentlichungstag der Anmeldung: **21.06.2000**
(21) Anmeldenummer: 98123737.3
(22) Anmeldetag: 14.12.1998
(51) Int. Cl.: C03C 17/00

(54) **Einrichtung zur pyrolytischen Beschichtung von Flachglas**

(71) Anmelder: VENJAKOB MASCHINENBAU GmbH & Co.KG, D-33378 Rheda-Wiedenbrück (DE)
(72) Erfinder: Pocher, Rainer, 33378 Rheda-Wiedenbrück (DE); Hauser, Wolfgang, 33378 Rheda-Wiedenbrück (DE)
(74) Vertreter: Stracke, Alexander, Dipl.-Ing.

(57) **Zusammenfassung**

Eine Einrichtung zur pyrolytischen Beschichtung von heißen Flachglasscheiben soll in konstruktiv einfacher Weise so gestaltet werden, daß sie mit hoher Wirtschaftlichkeit betrieben werden kann und die aufgebrachte Beschichtung qualitativ gegenüber bekannten Einrichtungen verbessert wird.

Erfindungsgemäß ist oberhalb eines Förderers 18 ein Gehäuse 11 , dessen Boden 11a thermisch isoliert ist und in dem Öffnungen vorgesehen sind, um Spritzpistolen 13 längs einer vorgegebenen Bahn zu bewegen. Seitlich neben die Spritzpistolen 13 sind Strömungsdiffusoren 16 angeordnet, um einen Kühl- oder Kaltluftstrom auf die Flachglasscheiben 14 zu richten. Die Temperatur der zu beschichtenden Flachglasscheiben 14 liegt zwischen 580 und 630° Celsius. Die Kühlluft- oder Kaltluftströme bewirken auch, daß der sich bildende Dampf auf eine Konzentration verdünnt wird, die unterhalb der Explosionsgrenze liegt. Der Dampf wird durch Absaugkanäle 17 abgesaugt, die zwischen dem Förderer 18 und dem Boden 11a des Gehäuses 11 liegen.

Die erfindungsgemäße Einrichtung ist besonders für Flachglas geeignet, das für Fassaden und Fenster verwendet wird.

## Beschreibung

Die Erfindung betrifft eine Einrichtung zur pyrolytischen Beschichtung von Flachglas. Die Erfindung bezieht sich insbesondere auf eine Einrichtung zur pyrolytischen Beschichtung von heißen Flachglasscheiben, sowohl innerhalb einer Flachglaslinie als auch innerhalb einer Nachbehandlungslinie. Bei einer Flachglaslinie wird ein endloses Band aus Glas beschichtet, während in einer Nachbehandlungslinie Glasscheiben beschichtet werden.

Flachglasscheiben werden bevorzugt im Bauwesen für Fassadenverkleidungen, Fenster und dergleichen verwendet. Die Beschichtung kann verschiedene Zwecke erfüllen, beispielsweise um das Transmissionsvermögen hinsichtlich einer Infrarotstrahlung zu reduzieren, oder die Beschichtungen können reflektierend oder absorbierend wirken, um eine Sonneneinstrahlung abzuschirmen oder um Farbtönungen zu erzeugen.

Die in Frage kommenden Beschichtungen werden bisher in äußerst aufwendiger Art und Weise mittels sog. Sputteranlagen unter Anwendung eines Plasmas im Vakuum aufgebracht, oder im sog. CVD-Verfahren aus Dämpfen von geeigneten Chemikalien auf der Glasoberfläche abgeschieden. Dabei kann wegen des nötigen Vakuums eine Sputteranlage nur chargenweise beschickt werden. Die dabei erzeugte Schicht ist sinngemäß nur aufgelegt und daher anfällig für mechanische Beschädigungen, in deren Folge die optische Qualität der Schicht beeinträchtigt werden kann.

Gegenüber dem CVD-Verfahren bietet die pyrolytische Sprühbeschichtung eine höhrere Vielfalt an möglichen Schichtarten und eine größere Flexibilität. Dieses Verfahren wurde aber bisher im industriellen Flachglasbereich nicht erfolgreich eingesetzt.

Der Erfindung liegt die Aufgabe zugrunde, eine Einrichtung zur pyrolytischen Beschichtung von vorzugsweise heißem Flachglas zu schaffen, die konstruktiv einfach aufgebaut ist, die wirtschaftlich betrieben werden kann und durch deren Einsatz gewährleistet ist, daß die Beschichtungsmöglichkeiten vielfältiger als bei den bekannten Verfahren sind, und daß die erzeugten Schichten verschleißfester sind.

Die gestellte Aufgabe wird gelöst, indem oberhalb eines Förderers zum Transport des Flachglases ein Gehäuse vorgesehen ist, in dem mehrere mittels eines Antriebes längs wenigstens einer vorgegebenen Bahn bewegbare Spritzpistolen angeordnet sind, das in dem dem Förderer zugewandten Boden des Gehäuses der Bahn bzw. den Bahnen entsprechende Öffnungen für die Spritzpistolen vorgesehen sind, und daß seitlich neben der Öffnung oder den Öffnungen Luftdurchströmkanäle für aus dem Gehäuse ausströmende Kühlluft liegen, denen Luftabsaugkanäle funktionell zugeordnet sind.

Die Spritzpistolen können in einer Reihe oder in mehreren Reihen angeordnet sein, wobei sie im letzteren Falle parallel und im Abstand zueinander liegen. Jede Reihe wird oszillierend und quer zur Durchlaufrichtung des Flachglases angetrieben. Bei einer anderen Ausführung sind die Spritzpistolen an einem umlaufenden Förderer angeordnet, wobei die Hauptlaufrichtung ebenfalls quer zur Durchlaufrichtung des Flachglases verläuft. Die Spritzpistolen stehen zweckmäßigerweise so, daß die Sprühdüsen durch die Öffnungen hindurchragend verlaufen. Das Gehäuse dient nicht nur zur Aufnahme der Spritzpistolen und des Antriebes, sondern auch der Kühlluftzuführung. Die im Boden vorgesehenen Öffnungen zum Ausströmen der Kühlluft sind so gelegt, daß sie sinngemäß seitlich neben den aus den Spritzpistolen austretenden Sprühstrahlen liegen. Die Temperatur des heißen Flachglases liegt zwischen 550 und 630°C. Die aus den Spritzpistolen austretenden Strahlen enthalten nicht nur die für die Beschichtung notwendigen gelösten Salze, sondern u.a. auch Lösungsmittel. Beim Auftreffen auf das heiße Flachglas entstehen dadurch große Dampfmengen. Durch die Kühlluftströme wird der Dampf auf eine Konzentration verdünnt, die unterhalb der Explosionsgrenze liegt. Außerdem wird in Verbindung mit den Absaugkanälen der entstehende Dampf abgesaugt. Die pyrolytische Beschichtung bietet den Vorteil, daß die die Beschichtung bildenden Salze zerfallen und durch eine chemisch-physikalische Umwandlung eine Verbindung mit der Glasoberfläche eingehen.

Das zu beschichtende Flachglas strahlt aufgrund seiner Temperatur eine sehr hohe Wärmemenge ab. Damit sich das Gehäuse und demzufolge auch die darin enthaltenden Einbauten nicht erwärmen ist vorgesehen, daß zumindest der Boden des Gehäuses eine thermisch isolierende Schicht aufweist. Alternativ dazu könnte der Boden auch aus einem thermisch isolierenden Material gefertigt sein. Zur gezielten Luftführung aus dem Gehäuse heraus, ist vorgesehen, daß die Luftdurchströmkanäle als Strömungsdiffusoren ausgebildet sind, die beidseitig neben der Bahn bzw. den Bahnen für die Spritzpistolen angeordnet sind und sich quer zur Durchlaufrichtung des Flachglases erstrecken. Die Strömungsdiffusoren sind so gestaltet, daß die Luftströme seitlich neben den aus den Spritzpistolen austretenden Strahlen verlaufen. Die Durchmesser der Düsen der Spritzpistolen sind verhältnismäßig klein. Es ist deshalb vorgesehen, daß die Bahn bzw. die Bahnen im Boden des Gehäuses als Schlitze ausgebildet sind, und daß an den Spritzpistolen mitlaufende, die Schlitze übergreifende Abdeckelemente angeordnet sind. Durch die Abdeckelemente wird eine relative Abdichtung erreicht und verhindert, daß eine Infra-Rot-Strahlung bzw. Dämpfe in das Innere des Gehäuses gelangen.

Diese Abdeckelemente können plattenförmig ausgebildet sein und sind vorzugsweise im Inneren des Gehäuses angeordnet. Die Absaugkanäle erstrecken sich zweckmäßigerweise quer zur Durchlaufrichtung des Flachglases. Da sie benachbart zu den Öffnungen im Boden liegen, sind sie dort angeordnet, wo die Dampfbildung erfolgt. Dabei ist es dann vorteilhaft, wenn die Absaugkanäle als Rohre ausgebildet sind, die im unteren, dem Förderer für das Flachglas zugeordneten Bereich mit Absaugöffnungen versehen sind. Diese Absaugöffnungen können beispielsweise Langlöcher sein.

Anhand der beiliegenden Zeichnung wird die Erfindung noch näher erläutert. Es zeigt die erfindungsgemäße Einrichtung in einer Seitenansicht, rein schematisch.

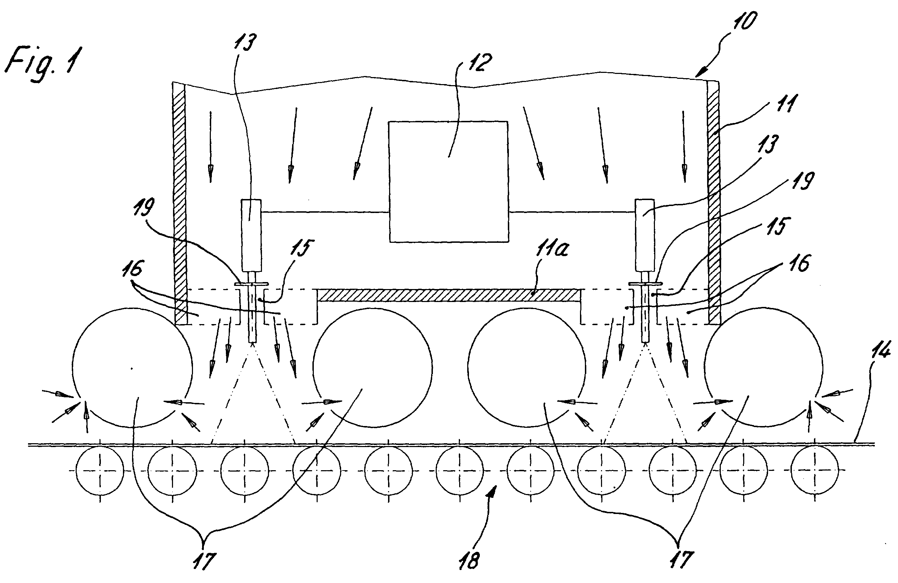

Die in den Figuren dargestellte Einrichtung 10 zur pyrolytischen Beschichtung von heißen Flachglas weist ein Gehäuse 11 auf, dessen Boden 11a in nicht näher dargestellter Weise mit einer thermisch isolierenden Schicht versehen ist oder der Boden 11a besteht aus einem thermisch isolierenden Material. Innerhalb des Gehäuses ist ein nicht näher erläuterter Antrieb 12 vorgesehen, um die im wesentlichen innerhalb des Gehäuses 11 liegenden Spritzpistolen 13 anzutreiben. Die Spritzpistolen 13 können quer zur Durchlaufrichtung der zu beschichtenden Flachglasscheiben 14 oszillierend oder auch umlaufend angetrieben werden. Derartige Antriebe sind allgemein bekannt und werden deshalb nicht näher erläutert, ebenso die Druckluftzufuhr zu den Spritzpistolen 13. Im Boden 11a des Gehäuses 11 ist entsprechend der Bahn bzw. den Bahnen die die Spritzpistolen 13 beschreiben, mit einer oder mehreren Öffnungen 15 versehen, die schlitzartig ausgebildet sind. Die Düsen der Spritzpistolen ragen durch diese Öffnungen 15 hindurch, so daß die austretenden Strahlen auf das Flachglas 14 gerichtet sind. Beidseitig neben den Spritzpistolen 13 bzw. den Düsen sind Strömungsdiffüsoren 16 vorgesehen, um Kühlluft- oder Kaltluftströme gleichmäßig auf das Flachglas 14 zu richten. Wie die Figur 1 zeigt, sind die Strömungsdiffusoren 16 so gestaltet, daß die Kühlluftströme seitlich neben den Spritzstrahlen verlaufen. Beidseitig neben den Öffnungen 15 sind rohrförmige Absaugkanäle 17 vorgesehen, die im unteren, dem Flachglas 14 zugewandten Bereichen mit Absaugöffnungen versehen sind. Dadurch werden die entstehenden Dämpfe abgesaugt, so daß sie nicht in das Innere des Gehäuses 11 gelangen können. Durch das Auftreffen der Kühlluft wird der Dampf erheblich verdünnt und abgekühlt, so daß ein Entflammen oder Explodieren verhindert wird. Aus der Figur 1 ergibt sich, daß der Durchmesser der rohrförmigen Absaugkanäle 17 in etwa dem Abstand zwischen einem dem Flachglas 14 transportierenden Förderer 18 zum Boden 11a des Gehäuses 11 entspricht. Im dargestellten Ausführungsbeispiel ist der Förderer 18 ein Horizontalförderer, der aus einer Vielzahl von Rollen besteht. Aus Gründen der vereinfachten Darstellung ist die Zuführung der Kühl- bzw. Kaltluft nicht näher dargestellt.

Damit keine Fremdpartikel auf die Glasscheiben 14 gelangen, sollte die Kühl- oder Kaltluft gefiltert werden. Damit kein Dampf und keine Wärmestrahlung in das Innere des Gehäuses 11 gelangt, sind an den Spritzpistolen 13 Abdeckplatten 19 befestigt, die im dargestellten Aus-führungsbeispiel an der Innenseite der Strömungsdiffusoren liegen. Diese Abdeck-elemente oder Abdeckplatten werden demzufolge mit den Spritzpistolen 13 bewegt.

## Patentansprüche

1. Einrichtung zur pyrolytischen Beschichtung von Flachglas, **dadurch gekennzeichnet, daß** oberhalb eines Förderers (18) zum Transport des Flachglases (14) ein Gehäuse (11) vorgesehen ist, in dem mehrere mittels eines Antriebes (12) längs wenigstens einer vorgegebenen Bahn bewegbare Spritzpistolen (13) angeordnet sind, daß in dem dem Förderer (18) zugewandten Boden (11a) des Gehäuses (11) der Bahn bzw. den Bahnen entsprechende Öffnungen (15) für die Spritzpistolen (13) vorgesehen sind, und daß seitlich neben der Öffnung (15) oder den Öffnungen Luftdurchströmkanäle (16) für aus dem Gehäuse (11) ausströmende Kalt- oder Kühlluft liegen, denen Absaugkanäle (17) funktionell zugeordnet sind.

2. Einrichtung nach Anspruch 1, **dadurch gekennzeichnet, daß** zumindest der Boden (11a) des Gehäuses 11 eine thermisch isolierende Schicht aufweist oder daß der Boden 11a des Gehäuses (11) aus einem thermisch isolierenden Material besteht.

3. Einrichtung nach Anspruch 1, **dadurch gekennzeichnet, daß** die Luftdurchströmkanäle als Strömungsdiffüsoren (16) ausgebildet sind, die beidseitig neben der Bahn bzw. den Bahnen für die Spritzpistolen (13) angeordnet sind, und die sich quer zur Durchlaufrichtung des Flachglases (14) erstrecken.

4. Einrichtung nach einem oder mehreren der vorhergehenden Ansprüche 1- 3, **dadurch gekennzeichnet, daß** die Bahn bzw. die Bahnen für die Spritzpistolen (13) im Boden (11a) des Gehäuses (11) als Schlitze ausgebildet sind, und daß an den Spritzpistolen mitlaufende, die Schlitze übergreifende Abdeckelemente (19) angeordnet sind.

5. Einrichtung nach einem oder mehreren der vorhergehenden Ansprüche 1-4, **dadurch gekennzeichnet, daß** die Absaugkanäle (17) sich quer zur Durchlaufrichtung des Flachglases (14) erstrecken.

6. Einrichtung nach einem oder mehreren der vorhergehenden Ansprüche 1-5, **dadurch gekennzeichnet, daß** die Absaugkanäle (17) als Rohre ausgebildet sind, die im unteren, dem Förderer (18) für das Flachglas (14) zugeordneten Bereich mit Absaugöffnungen versehen sind.

7. Einrichtung nach Anspruch 6, **dadurch gekennzeichnet, daß** die Absaugöffnungen als Langlöcher ausgebildet sind.
